Europäisches Patentamt

European Patent Office

Office européen des brevets

(11) Veröffentlichungsnummer: **0 575 683 A1**

(12) **EUROPÄISCHE PATENTANMELDUNG**

(21) Anmeldenummer: **92810393.6**

(22) Anmeldetag: **25.05.92**

(51) Int. Cl.5: **H02J 3/01**, H02J 3/18, H02M 1/12

(43) Veröffentlichungstag der Anmeldung:
**29.12.93 Patentblatt 93/52**

(84) Benannte Vertragsstaaten:
**AT BE CH DE DK ES FR GB GR IT LI LU MC NL PT SE**

(71) Anmelder: **EMIL HAEFELY & CIE AG**
**Lehenmattstrasse 353**
**CH-4028 Basel(CH)**

(72) Erfinder: **Lo Pizzo, Gaétan G.**
**1, Place de la Gare**
**F-68300 St. Louis(FR)**

(74) Vertreter: **Eschmann, Heinz et al**
**A. Braun, Braun, Héritier, Eschmann AG**
**Patentanwälte**
**Holbeinstrasse 36-38**
**CH-4051 Basel (CH)**

(54) **Dämpfungsvorrichtung für Kompensations-und Filterschaltungen in Stromversorgungsnetzen.**

(57) Die Dämpfungsvorrichtung umfasst - nebst üblichen Schaltelementen wie beispielsweise ein Kondensator ($C_d$) und ein Dämpfungswiderstand ($R_d$) - einen induktiven Koppler mit wenigstens einer Induktionsspule ($L_f$) auf seiten einer Kompensations- resp. Filterschaltung und wenigstens einer zweiten Induktionsspule ($L_d$) auf seiten der Dämpfungsanordnung. Die beiden Induktionsspulen ($L_f$, $L_d$), vorzugsweise Luftspulen, sind mit einem Verbindungselement (6) galvanisch leitend verbunden. In bevorzugten Ausführungsformen ist die eine Induktionsspule ($L_d$) ausserhalb der anderen ($L_f$) angeordnet. Mit der vorgeschlagenen Vorrichtung werden Aufbau und Abstimmung des induktiven Kopplers und insbesondere seine isolationstechnische Auslegung vorteilhaft vereinfacht und damit auch die Herstellungskosten gesenkt. Überdies wird eine Möglichkeit geschaffen, bestehende Anlagen vergleichsweise einfach mit einer zusätzlichen Dämpfungsvorrichtung zu ergänzen und damit sich erst im praktischen Einsatz erweisende Probleme nachträglich zu beheben.

Fig. 8b

Fig. 8a

EP 0 575 683 A1

Die Erfindung betrifft eine Dämpfungsvorrichtung für Kompensations- resp. Filterschaltungen in Starkstromversorgungsnetzen, mit einem aus wenigstens einer ersten Induktionsspule auf seiten einer Kompensations- resp. Filterschaltung und wenigstens einer zweiten Induktionsspule auf seiten der Dämpfungsvorrichtung bestehenden induktiven Koppler, dessen Übersetzungsverhältnis von der ersten zur zweiten Induktionsspule grösser eins ist.

Die moderne Leistungselektronik hat in den letzten Jahren eine rasche Weiterentwicklung erfahren: In sehr vielen Bereichen ist eine schnelle Zunahme an Steuerungs- und Regelungssystemen für Motoren, Maschinen und andere elektrische Apparate festzustellen.

Diese Systeme verwenden im allgemeinen Umformer oder Steuerungsvorrichtungen mit Phasenregelung, Frequenzregelung, Schwingungspaketen usw. Umformer und andere Systeme stellen für die Versorgungsnetze nichtlineare Lasten dar. Andere elektrische Geräte, wie zum Beispiel Transformatoren mit hohen Magnetisierungsströmen, Lichtbogenöfen oder Entladungslampen, üben ebenfalls störende Rückwirkungen auf die Versorgungsnetze aus. All diese Systeme erhöhen nicht nur den Blindleistungsbedarf, sondern erzeugen auch Oberschwingungsströme. Diese wiederum verursachen in Verbindung mit der Netzimpedanz Oberschwingungsspannungen.

Eine Belastung des Netzes durch Oberschwingungsspannungen kann andere Energieverbraucher und elektrische Vorrichtungen beeinflussen, zum Beispiel durch Fehler an Stromzählern und Messgeräten, Störung der Befehle zentralisierter Fernbedienungen, grössere Leitungsverluste, Überhitzung von Motoren, das Risiko der Zerstörung von Phasenschieberkondensatoren und Transformatoren, fehlerhafte Funktion von Rechnern und anderen empfindlichen Geräten.

Die vielfach eingesetzte Kompensation der induktiven Blindleistung von Verbrauchern alleine durch Kondensatorbatterien führt zu gut bekannten nachteiligen Parallelresonanzerscheinungen. Diese Parallelresonanzen breiten sich in den Versorgungs- und den Kompensationszweigen des Netzes aus und können die von Netzrückwirkungen stammenden Oberschwingungsströme verstärken.

Um den nachteiligen Auswirkungen der Parallelresonanzen zu begegnen, werden Induktionsspulen in Serie mit den Kondensatorbatterien geschaltet. Damit lassen sich die Parallelresonanzfrequenzen in Frequenzbereiche verlegen, in welchen die Oberschwingungsströme als klein oder vernachlässigbar vorausgesetzt werden. Die Induktivität der Induktionsspulen in Serie mit der Kapazität der Kondensatorbatterie dient als Filter überdies dazu, einen Schaltungszweig zu schaffen, dessen Impedanz bei der Frequenz der Serieresonanz minimal ist, womit die der Resonanzfrequenz des Filters entsprechende Oberwelle des Versorgungsnetzes reduziert wird. Dabei kann eine Kompensationsschaltung auch mehrere Filterzweige umfassen, die jeweils einer Oberwelle angepasst sind.

Bei der beschriebenen Methode liegen die Parallelresonanzfrequenzen immer unterhalb der Serieresonanzfrequenzen der Zweige der verschiedenen Filter. Unter Betriebsbedingungen bleibt gleichwohl auch mit dieser Methode ein echtes Risiko bestehen, denn man kann nicht ausschliessen, dass irgendwo im Netz Oberschwingungsströme mit Frequenzen nahe der Parallelresonanz erzeugt werden, die in einer Überlastung von Filter und Versorgungsnetz resultieren. Dieser Schwierigkeit wird deshalb gewöhnlich dadurch begegnet, dass im Filterzweig ein serieller oder paralleler Dämpfungswiderstand eingefügt wird.

Das Einfügen eines Dämpfungswiderstandes bringt jedoch andere Nachteile, denn erstens werden damit die Verluste, insbesondere bei der Grundfrequenz des Netzes, beträchtlich vergrössert, und zweitens sind Widerstände für höhere Spannungen, in der Regel ab etwa 20 Kilovolt, sehr gross und nur aufwendig und kostenintensiv herzustellen.

Eine Lösung dieses Problems zeigt die europäische Patentanmeldung Nr. 299 916. Hier wird vorgeschlagen, die Dämpfungsanordnung nicht direkt in die Kompensationsrespektive Filterschaltung einzufügen, sondern diese über einen induktiven Koppler mit einem Übersetzungsverhältnis grösser eins anzukoppeln. Auf diese Weise lässt sich die Dämpfungsanordnung auf kleinere Spannungen ausgelegen, was erlaubt, die Verluste zu reduzieren und Bauelemente zu verwenden, die entsprechend kompakter, billiger und zuverlässiger sind.

Die genannte Patentanmeldung Nr. 299 916 geht davon aus, dass die Ausführung des induktiven Kopplers nach bekanntem Stand der Technik erfolgt. Gerade bei hohen und höchsten Spannungen wird jedoch die Beherrschung der hohen Potentialunterschiede und der notwendigen Isolation ein gewichtiges technisches Problem, das in konventioneller Technik nur mit sehr aufwendigen Mitteln zu lösen ist. Ebenfalls nach dem Stand der Technik sehr aufwendig wird ein nachträglicher Einbau eines induktiven Kopplers in schon bestehende Filterschaltungen. Dies wäre aber in vielen Fällen sehr wünschenswert, um bestehende Mängel nachträglich korrigieren und beispielsweise erst im realen Betrieb erkannten Netzrückwirkungen begegnen zu können.

Es ist daher die Hauptaufgabe der Erfindung, eine Dämpfungsvorrichtung zu schaffen, welche die genannten Nachteile beseitigt, somit insbesondere die Herstellung vorteilhaft vereinfacht und sich auch zur Ergänzung schon bestehender Filteranlagen eignet.

Die erfindungsgemässe Lösung dieser Aufgabe ergibt sich durch die in den Patentansprüchen definierten Kennzeichen.

Die vorgeschlagene galvanische Verbindung der beiden Induktionsspulen erleichtert sowohl die Dimensionierung der notwendigen Isolation an sich, als auch die sogenannte Isolationskoordination, das heisst, die isolationstechnische Sicherheitsauslegung (Blitzeinwirkung usw.) und die Abstimmung auf die jeweilige Betriebsumgebung.

Da überdies auf einen Kern aus einem magnetischen Werkstoff verzichtet werden kann, entfällt in vorteilhafter Weise auch die sonst bei hohen Spannungen schwierig zu erreichende Isolation des Kerns und das Frequenzverhalten des Kopplers ist, unbeeinflusst von der frequenz- und spannungsabhängigen Wirkung eines magnetischen Kerns, in hohem Masse linear.

Weiter vorteilhaft, erlaubt die erfindungsgemässe Dämpfungsvorrichtung, insbesondere die Anordnung der Induktionsspule der Dämpfungsvorrichtung ausserhalb der Induktionsspule der Filterschaltung, einen nachträglichen Anbau an schon installierte Kompensations- oder Filterschaltungen, da eine zusätzliche Dämpfungsvorrichtung über eine schon vorhandene Induktionsspule angekoppelt werden kann. Damit lassen sich in gezielter und kostengünstiger Weise auch solche Schwierigkeiten beheben, die erst im praktischen Einsatz unter den wirklichen Bedingungen erkannt werden und die ohne die Erfindung einen vollständigen Umbau oder gar Ersatz der sich als untauglich erweisenden Schaltung bedeuteten, was insbesondere bei höheren Spannungen mit ausgesprochen hohen finanziellen Verlusten verbunden wäre.

Die Erfindung wird im folgenden anhand einiger Ausführungsbeispiele und bezugnehmend auf die beiliegende Zeichnung näher erläutert. In der Zeichnung zeigen:

Fig. 1 ein Schema eines Stromversorgungsnetzes mit einer Kompensationsschaltung nach dem Stand der Technik,

Fig. 2 das allgemeine Frequenzverhalten der Kompensationsschaltung von Fig. 1,

Fig. 3a und 3b Schemata von zwei induktiv an eine Kompensationsschaltung angekoppelten Dämpfungsvorrichtungen,

Fig. 4 den Aufbau eines induktiven Kopplers einer erfindungsgemässen Dämpfungsvorrichtung,

Fig. 5 ein Schema eines induktiven Kopplers mit galvanischer Verbindung,

Fig. 6 und 7 zwei weitere Ausführungsbeispiele eines induktiven Kopplers einer erfindungsgemässen Dämpfungsvorrichtung,

Fig. 8a ein Beispiel eines konkreten Aufbaus einer erfindungsgemässen Dämpfungsvorrichtung in Seitenansicht, und

Fig. 8b ein der Figur 8a entsprechendes Schaltschema.

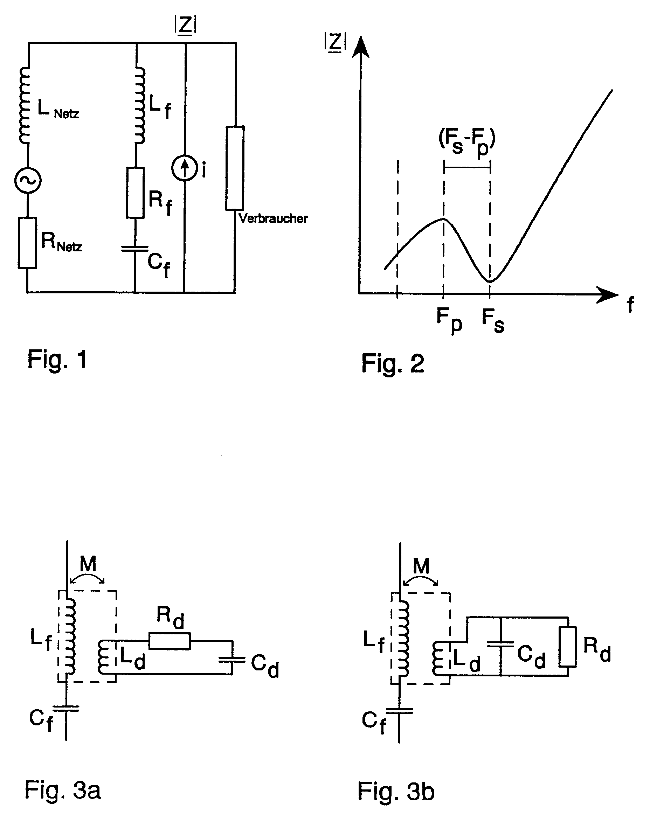

Zunächst soll - in Ergänzung zum in der Einleitung Gesagten - kurz auf den allgemeinen Zusammenhang der Erfindung eingegangen werden. Fig. 1 gibt ein einfaches Schema für ein Versorgungsnetz mit einem Verbraucher und einer Kompensations- respektive Filterschaltung. Der Verbraucher erzeugt Netzrückwirkungen, symbolisiert mit der aktiven Stromquelle i. Die Kompensationsschaltung besteht aus einem gedämpften Filter mit einer Induktionsspule $L_f$, einem Kondensator $C_f$ und einem Dämpfungswiderstand $R_f$. Fig. 2 zeigt das Frequenzverhalten einer entsprechenden Impedanz $\underline{Z}$ mit einem Minimum bei der Serieresonanzfrequenz $F_s$ der Kompensationsschaltung und einem gedämpften Maximum bei der Parallelresonanzfrequenz $F_p$. Mit erweiterten Kompensationsschaltungen ist es in analoger Weise möglich, auch mehrere, verschiedenen Oberschwingungen angepasste Serieresonanzfrequenzen zu bilden und gleichzeitig die nachteiligen Parallelresonanzfrequenzen in möglichst günstige Frequenzbereiche zu verschieben.

Wie weiter oben schon erwähnt, führt ein Dämpfungswiderstand in einer Kompensationsschaltung zu unerwünschten Verlusten. Zudem sind für hohe Spannungen ausgelegte Widerstände sehr voluminös, schwierig herzustellen und teuer. Es ist deshalb vorgeschlagen worden, anstelle eines Dämpfungswiderstandes eine zusätzliche Dämpfungsanordnung einzusetzen, die mit der Kompensationsschaltung induktiv gekoppelt wird. Die Fig. 3a und 3b zeigen zwei einfache Beispiele einer solchen Schaltung. Die Dämpfungsanordnung weist eine Induktionsspule $L_d$ und weitere Schaltelemente, beispielsweise einen Kondensator $C_d$ und einen Widerstand $R_d$ auf. Die induktive Kopplung zwischen der Kompensationsrespektive Filterschaltung und der Dämpfungsanordnung erfolgt über die Induktionsspulen $L_f$ und $L_d$. Dabei ist das Übersetzungsverhältnis des induktiven Kopplers auf grösser eins ausgelegt, was dazu führt, dass in der Dämpfungsvorrichtung kleinere Spannungen wirken und entsprechend kleiner dimensionierte Schaltelemente verwendet werden können.

Trotz der offensichtlichen Vorteile erzeugt der Einsatz einer induktiv gekoppelten Dämpfungsvorrichtung doch auch ein neues Problem, denn derartige induktive Koppler sind für hohe Spannungen, die bei Stromversorgungsnetzen Werte von 20 bis zu 400 und mehr Kilovolt betragen können, nach dem Stand der Technik nur sehr aufwendig herzustellen. Diesem Problem wird durch die Erfindung abgeholfen.

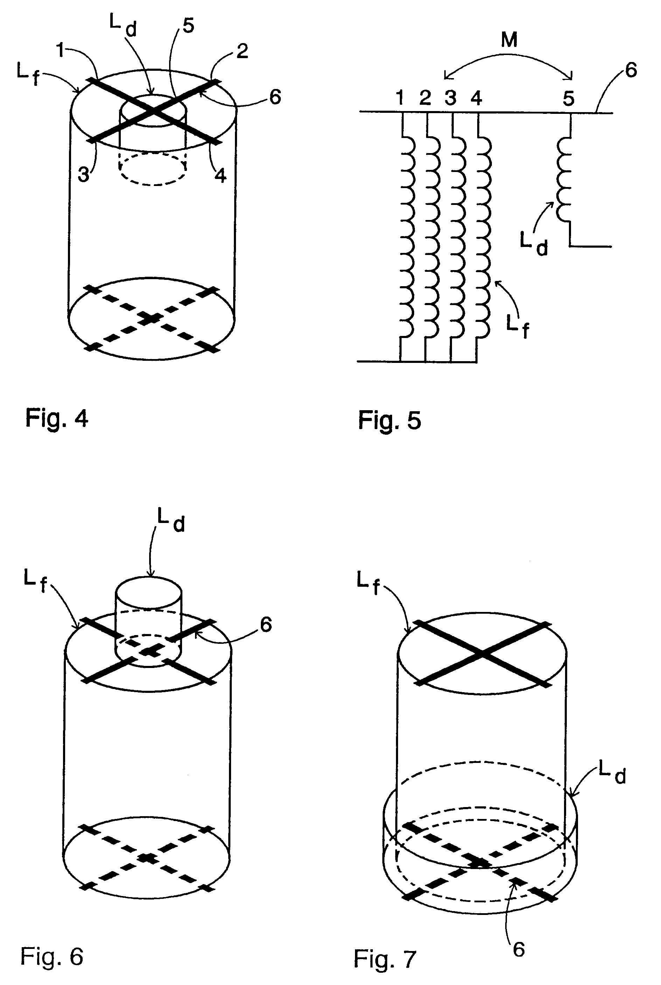

Fig. 4 skizziert den Aufbau einer Ausführungsform eines induktiven Kopplers für eine erfindungsgemässe Dämpfungsvorrichtung. Wie oben bezeichnet $L_f$ die Induktionsspule der Kompensations- respektive Filterschaltung und $L_d$ die Induktionsspule der Dämpfungsvorrichtung. Beides sind Zylinderspulen, bevorzugt Luftspulen. Die (kleinere) Induktionsspule $L_d$ ist innerhalb des von der Induktionsspule $L_f$ umschlossenen Raums und von dieser beabstandet angeordnet. Gemäss der Erfindung sind die beiden Induktionsspulen mit einem Verbindungselement 6 galvanisch verbunden. Bevorzugt weist das Verbindungselement 6 mehrere sternförmig angeordnete Stromverteilungsarme auf.

Der näheren Erläuterung der galvanischen Verbindung dient das Schema von Fig. 5. Im gezeigten Beispiel besteht die Induktionsspule $L_f$ aus vier Wicklungen und die Induktionsspule $L_d$ aus einer Wicklung. Der Leiter, der die fünf Wicklungen verbindet, entspricht dem Verbindungselement 6. Die vier Wicklungen von $L_f$ sind je an einem Armende des Verbindungselements 6 (Positionen 1,2,3,4, vgl. Fig. 4) und die Wicklung von $L_d$ an einem der Arme oder im Zentrum (Position 5) angeschlossen.

Die galvanische Verbindung der beiden Induktionsspulen erlaubt, die notwendige Isolation kleiner als bei herkömmlichen induktiven Kopplern zu dimensionieren. Insbesondere wird es dadurch unmöglich, dass durch Ausseneinwirkung, zum Beispiel durch Blitzschläge, zwischen den Induktionsspulen zusätzliche Potentialunterschiede entstehen können, welche bei der Auslegung der Isolation mitberücksichtigt werden müssten. Zur weiteren Vereinfachung der Isolationsdimensionierung können die beiden Induktionsspulen zusätzlich beabstandet angeordnet sein.

Weitere Ausführungsbeispiele eines induktiven Kopplers einer erfindungsgemässen Dämpfungsvorrichtung zeigen die Fig. 6 und 7. Hier befindet sich die Induktionsspule $L_d$ der Dämpfungsvorrichtung nicht innerhalb der Induktionsspule $L_f$, sondern ausserhalb. In Fig. 6 schliesst $L_d$ koaxial an $L_f$ an, in Fig. 7 umgibt $L_d$ einen Endbereich von $L_f$. Die galvanische Verbindung kann auch bei diesen Ausführungsbeispielen wie vorstehend beschrieben erfolgen. Da insbesondere bei diesen Varianten die Induktionsspule der Dämpfungsvorrichtung vergleichsweise leicht zu einer schon in einer bestehenden Kompensationsschaltung vorhandenen Induktionsspule zugefügt werden kann, eignen sich diese speziell auch zur nachträglichen Ergänzung einer Kompensationsschaltung.

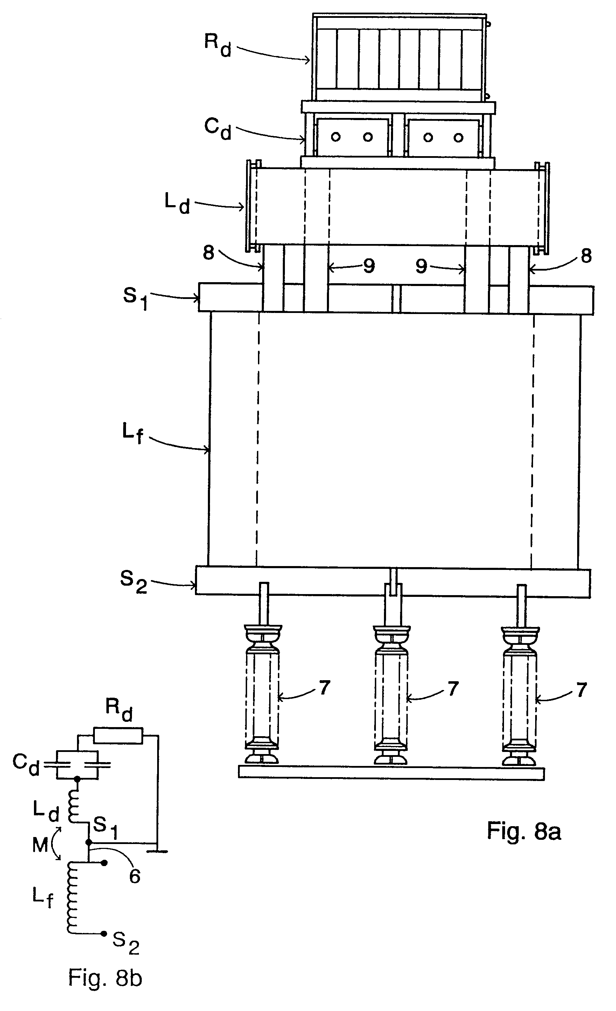

Ein möglicher konkreter Aufbau einer Dämpfungsvorrichtung mit induktivem Koppler ist in Fig. 8a dargestellt. Die Anordnung der beiden Induktionsspulen des Kopplers entspricht grundsätzlich der in Fig. 6 gezeigten. Die Bezugszeichen werden korrespondierend zu den übrigen Figuren verwendet. Auf insgesamt vier Stützisolatoren 7 (drei zu sehen) ist die Induktionsspule $L_f$ einer Kompensationsbeziehungsweise Filterschaltung abgestützt. Die Induktionsspule $L_d$ der Dämpfungsvorrichtung befindet sich oberhalb der Induktionsspule $L_f$, gehalten durch Stützelemente 8. Beide Spulen sind zylindrische Luftspulen. Mit $S_1$ bzw. $S_2$ sind Stromverteiler bezeichnet. Die übrigen Elemente der Dämpfungsvorrichtung, nämlich ein Kondensator $C_d$ (hier ausgeführt mit zwei parallelgeschalteten Kondensatoren) und ein Widerstand $R_d$, sind auf weiteren Stützelementen 9 oberhalb der Induktionsspule $L_d$ angeordnet. Das zur eben beschriebenen Anordnung gehörige Schaltschema ist aus Fig. 8b ersichtlich.

Es sei ausdrücklich erwähnt, dass die dargestellten und beschriebenen Ausführungsformen lediglich Beispiele darstellen, die vom Fachmann im Rahmen des im unabhängigen Patentanspruch definierten Erfindungsgedankens in mehrfacher Weise abgewandelt werden können. So wäre es insbesondere auch möglich, die beiden Induktionsspulen nebeneinander anzuordnen oder anstelle der Zylinderspulen Scheibenspulen zu verwenden. Ebenso ist die galvanische Verbindung der beiden Induktionsspulen in vielen Varianten vorstellbar, und für spezielle Anwendungen liessen sich gegebenenfalls auch zwei oder mehr Induktionsspulen von Dämpfungsvorrichtungen an ein und dieselbe Induktionsspule einer Kompensations- respektive Filterschaltung ankoppeln.

Mit dem Aufbau der Induktionsspulen (Anzahl Windungen, Querschnitt usw.) und deren gegenseitigen Anordnung kann der induktive Kopplungsfaktor in grundsätzlich bekannter Weise an den jeweiligen Einsatz angepasst werden. Theoretische Überlegungen und Tests haben gezeigt, dass vorteilhaft ein induktiver Kopplungsfaktor im Bereich von 0,1 und 0,4 und ein Effektivwert der Nennspannung zwischen den Anschlüssen der Induktionsspule der Dämpfungsvorrichtung im Bereich von null bis zwei Kilovolt anzustreben ist.

Im praktischen Einsatz einer Dämpfungsvorrichtung muss weiterhin die sich durch das Zusammenwirken ihrer Elemente ergebende Lage ihrer Resonanzfrequenz $F_d$ besonders beachtet werden, da die Verbindung von Kompensations- resp. Filterschaltung, Verbraucher und Netz zu ihrerseits wieder störenden Resonanzfrequenzen führen kann, die nur sehr schwierig vorauszuberechnen sind. In bezug auf dieses Problem haben Berechnungen und eingehende Versuche ergeben, dass die Resonanzfrequenz $F_d$ der Dämpfungsanordnung vorteilhaft in einem Bereich liegen sollte, der abhängig von der Serieresonanzfrequenz $F_s$ der Kompensations- resp. Filterschaltung und der Parallelresonanzfrequenz $F_p$ von Kompensations- resp. Filterschaltung und Netz mit der folgenden Formel definiert ist (vgl. Fig. 2):

$F_p - (F_s - F_p) < F_d < F_s$ .

## Patentansprüche

1. Dämpfungsvorrichtung für Kompensations- resp. Filterschaltungen in Starkstromversorgungsnetzen, mit einem wenigstens eine erste Induktionsspule ($L_f$) auf seiten einer Kompensations- resp. Filterschaltung und wenigstens eine zweite Induktionsspule ($L_d$) auf seiten der Dämpfungsvorrichtung umfassenden induktiven Koppler, dessen Übersetzungsverhältnis von der ersten zur zweiten Induktionsspule grösser eins ist, *dadurch gekennzeichnet, dass* zur Angleichung des Potentials die beiden Induktionsspulen ($L_f$, $L_d$) mit einem Verbindungselement (6) galvanisch leitend verbunden sind.

2. Dämpfungsvorrichtung nach Patentanspruch 1, *dadurch gekennzeichnet, dass* die beiden genannten Induktionsspulen ($L_f$, $L_d$) Spulen ohne Kern aus einem magnetischen Werkstoff sind.

3. Dämpfungsvorrichtung nach einem der Patentansprüche 1 oder 2, *dadurch gekennzeichnet, dass* die zweite Induktionsspule ($L_d$) ausserhalb eines von den Umrissen der ersten Induktionsspule ($L_f$) umschlossenen Raumes angeordnet ist.

4. Dämpfungsvorrichtung nach Patentanspruch 3, *dadurch gekennzeichnet, dass* die zweite Induktionsspule ($L_d$) bezogen auf die Längsachse der ersten Induktionsspule ($L_f$) oberhalb oder unterhalb der ersten Induktionsspule angeordnet ist.

5. Dämpfungsvorrichtung nach einem der Patentansprüche 1 bis 4, *dadurch gekennzeichnet, dass* die zweite Induktionsspule ($L_d$) von der ersten Induktionsspule ($L_f$) beabstandet angeordnet ist.

6. Dämpfungsvorrichtung nach einem der Patentansprüche 1 bis 5, *dadurch gekennzeichnet, dass* das Verbindungselement (6) aus sternförmig angeordneten Stromverteilungsarmen besteht.

7. Dämpfungsvorrichtung nach einem der Patentansprüche 1 bis 6, *dadurch gekennzeichnet, dass* die beiden Induktionsspulen ($L_f$, $L_d$) so aufgebaut und angeordnet sind, dass der induktive Kopplungsfaktor, berechnet nach der Formel 'Gegeninduktion der beiden Induktionsspulen dividiert durch die Quadratwurzel aus dem Produkt von Selbstinduktion der ersten und Selbstinduktion der zweiten Induktionsspule' einen Wert zwischen 0,1 und 0,4 aufweist.

8. Dämpfungsvorrichtung nach einem der Patentansprüche 1 bis 7, *dadurch gekennzeichnet, dass* die beiden Induktionsspulen ($L_f$, $L_d$) so aufgebaut und angeordnet sind, dass der Effektivwert der Nennspannung zwischen den Anschlüssen der zweiten Induktionsspule ($L_d$) unter Betriebsbedingungen im Bereich von null bis zwei Kilovolt liegt.

9. Dämpfungsvorrichtung nach einem der Patentansprüche 1 bis 8, *dadurch gekennzeichnet, dass* deren Elemente ($C_d$, $L_d$, $R_d$) so abgestimmt sind, dass die Resonanzfrequenz ($F_d$) der Dämpfungsvorrichtung bezüglich der Serieresonanzfrequenz ($F_s$) von Kompensations- resp. Filterschaltung ($L_f$, $C_f$) und der Parallelresonanzfrequenz ($F_p$) von Kompensations- resp. Filterschaltung und Netz im Bereich zwischen $F_p-(F_s-F_p)$ und $F_s$ liegt.

10. Verwendung einer Dämpfungsvorrichtung nach einem der Patentansprüche 1 bis 9 zur nachträglichen Ergänzung einer bestehend installierten Kompensations- resp. Filterschaltung, wobei als erste Induktionsspule ($L_f$) eine schon in der bestehenden Kompensations- resp. Filterschaltung vorhandene Spule benützt wird.

Fig. 1

Fig. 2

Fig. 3a

Fig. 3b

Fig. 4

Fig. 5

Fig. 6

Fig. 7

Fig. 8a

Fig. 8b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 299 916 (EMIL HAEFELY)<br>* Spalte 1, Zeile 1 - Spalte 4, Zeile 26; Abbildungen 1-3 * | 1 | H02J3/01<br>H02J3/18<br>H02M1/12 |
| D,A | --- | 2,3 | |
| Y | US-A-4 961 044 (KRAVITZ)<br>* Spalte 3, Zeile 60 - Spalte 5, Zeile 51; Abbildungen 1-3 * | 1 | |
| A | DE-A-1 923 985 (GENERAL ELECTRIC COMPANY)<br>* Seite 4, Zeile 26 - Seite 10, Zeile 8; Abbildungen 1,2 * | 1,10 | |
| A | GB-A-1 230 830 (ASSOCIATED ELECTRICAL INDUSTRIES)<br>* Seite 1, Zeile 49 - Seite 2, Zeile 6; Abbildungen 1,2 * | 1,2 | |
| A | FR-A-2 235 526 (ATELIERS DE CONSTRUCTIONS ELECTRIQUES DE CHARLEROI)<br>* Seite 1, Zeile 40 - Seite 3, Zeile 17; Abbildungen 1,2 * | 1 | |
| A | ELEKTRONIK<br>Bd. 33, Nr. 2, Januar 1984, MUNCHEN DE Seiten 66 - 77<br>OGROSKE 'die störungsfreie stromversorgung moderner elektronik'<br>* das ganze Dokument * | 1 | |

| | | |
|---|---|---|
| | **RECHERCHIERTE SACHGEBIETE (Int. Cl.5)** | |
| | H02J<br>H02M | |

Der vorliegende Recherchenbericht wurde für alle Patentansprüche erstellt

| Recherchenort | Abschlußdatum der Recherche | Prüfer |
|---|---|---|
| DEN HAAG | 21 JANUAR 1993 | CALARASANU |